# EUROPÄISCHE PATENTSCHRIFT

(11) **EP 2 597 283 B1**
(45) Veröffentlichungstag und Bekanntmachung des Hinweises auf die Patenterteilung: **17.04.2019**
(21) Anmeldenummer: 12191598.7
(22) Anmeldetag: 07.11.2012
(51) Int. Cl.: F02C 6/12, F01D 17/16, F01D 9/04

(54) **Variable Turbinengeometrie**
Variable turbine geometry
Turbine à géométrie variable

(30) Priorität: 28.11.2011 DE 102011087244
(43) Veröffentlichungstag der Anmeldung: 29.05.2013
(73) Patentinhaber: BMTS Technology GmbH & Co. KG, 70376 Stuttgart (DE)
(72) Erfinder: Ammon, Volkhard, 72124 Pliezhausen (DE)
(74) Vertreter: BRP Renaud & Partner mbB Rechtsanwälte Patentanwälte Steuerberater

(56) Entgegenhaltungen:
- WO-A1-2009/102546
- DE-A1-102008 049 005
- DE-A1-102008 053 170
- DE-A1-102010 020 026
- DE-A1-102010 043 145
- US-A- 3 232 581
- US-A1- 2003 026 694

## Beschreibung

Die vorliegende Erfindung betrifft eine variable Turbinengeometrie, die in einem Schaufellagerring drehbar gelagerte Leitschaufeln aufweist, gemäß dem Oberbegriff des Anspruchs 1. Die Erfindung betrifft außerdem eine Ladeeinrichtung mit einer derartigen variablen Turbinengeometrie sowie einen Verbrennungsmotor mit einer derartigen Ladeeinrichtung.

Bei einer variablen Turbinengeometrie ist es erforderlich, zumindest einen minimalen Durchfluss exakt zu definieren und unter Umständen auch zu begrenzen, wobei dieser minimale Durchfluss mit einer entsprechenden Stellung der einzelnen Leitschaufeln der variablen Turbinengeometrie korrespondiert. Erreicht wird dies bisher bspw. mittels eines Gewindestifts, der zwischen einer Stelleinrichtung und einem Anlenkhebel der variablen Turbinengeometrie verläuft und über den mittels einer Drehbewegung eine Relativlage zwischen dem Anlenkhebel und der Stelleinrichtung exakt definiert werden kann.

Aus der DE 10 2008 049 005 A1 ist eine variable Turbinengeometrie für eine Ladeeinrichtung, insbesondere für einen Abgasturbolader für ein Kraftfahrzeug bekannt, die in einem Schaufellagerring drehbar gelagerte Leitschaufeln aufweist. Zur Verstellung der Leitschaufeln ist dabei ein Verstellring vorgesehen, der über einen Anlenkhebel von einer Stelleinrichtung verstellbar ist. Am Verstellring ist dabei zumindest eine Kontur vorgesehen, die in zumindest eine schaufellagerseitige Ausnehmung eingreift, wobei die Kontur mit der Ausnehmung derart zusammenwirkt, dass eine Verstellbewegung des Verstellrings relativ zum Schaufellagerring und damit bspw. ein minimaler Durchfluss durch die variable Turbinengeometrie begrenzt ist.

Die US 3 232 581 A zeigt eine variable Turbinengeometrie für eine Ladeeinrichtung, die einen Innenring und einen Außenring aufweist, wobei am jeweiligen Ring zugehörige Leitschaufeln derhbar gelagert sind. Innenring und Außenring sind relativ zueinander drehbar. Ein Anlenkhebel greift über einen Exzenter in eine Aussparung des Außenrings, um den Innenring relativ zum Außenring zu verdrehen und somit die variable Turbinengeometrie zu verstellen.

Die aus dem Stand der Technik bekannten variablen Turbinengeometrien besitzen dabei jedoch insgesamt den Nachteil, dass zur Sicherstellung bzw. Begrenzung des minimalen Durchflusses durch die variable Turbinengeometrie vergleichsweise aufwendige Begrenzungseinrichtungen verbaut werden, die zudem einen nicht zu unterschätzenden Bauraumbedarf erfordern.

Die vorliegende Erfindung beschäftigt sich daher mit dem Problem, für eine variable Turbinengeometrie der gattungsgemäßen Art eine verbesserte oder zumindest eine alternative Ausführungsform anzugeben, die sich insbesondere durch eine kompakte Bauweise und eine einfache Konstruktion auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, für eine Begrenzung der Stellung einer variablen Turbinengeometrie, insbesondere zur Begrenzung eines Minimaldurchflusses durch die variable Turbinengeometrie, einen einstellbaren Exzenter vorzusehen, der an einem Anlenkhebel zum Verstellen der variablen Turbinengeometrie angeordnet und in einer an einem Schaufellagerring angeordneten Nut geführt ist. Die erfindungsgemäße variable Turbinengeometrie besitzt dabei in bekannter Weise in dem Schaufellagerring drehbar gelagerte Leitschaufeln, wobei zur Verstellung der Leitschaufeln ein Verstellring vorgesehen ist, der über den Anlenkhebel von einer Stelleinrichtung verstellbar ist. Am Anlenkhebel angeordnet ist der einstellbare Exzenter, der zugleich in der am Schaufellagerring angeordneten Nut geführt ist. Durch einen Anschlag dieses Exzenters an zumindest einem Ende der schaufellageringseitigen Nut ist zumindest ein Minimaldurchfluss durch die variable Turbinengeometrie begrenzt. Der Anlenkhebel besitzt somit erfindungsgemäß zwei Funktionen, nämlich zum einen, die von der Stelleinrichtung erzeugte Stellbewegung an den Verstellring und damit an die variable Turbinengeometrie zu übermitteln und zum anderen die Verstellbewegung über den Exzenter zu begrenzen. Es kann somit eine besonders kompakt bauende und dadurch einen geringen Bauraumbedarf aufweisende Begrenzungseinrichtung geschaffen werden, die im Wesentlichen lediglich aus einem zusätzlich an einem Anlenkhebelkopf angeordneten Exzenter sowie einer zugehörigen am Schaufellagerring angeordneten Nut besteht. Im Vergleich zu bisher erforderlichen Gewindestangen und Kontermuttern, etc., kann nicht nur eine vergleichsweise einfache Montage, sowie eine Reduzierung der Teilevielfalt erzielt werden, sondern zugleich auch eine besonders kompakt bauende Lösung, die bei einem stetig kleiner werdenden Bauraumangebot in modernen Motorräumen von besonderem Vorteil ist. An dieser Stelle wird ausdrücklich betont, dass in den vorherigen Absätzen und in der nachfolgenden Beschreibung stets von einer variablen Turbinengeometrie gesprochen wird, wobei das erfindungsgemäße Prinzip selbstverständlich auch auf eine variable Verdichtergeometrie übertragen werden kann.

Bei einer vorteilhaften Weiterbildung der erfindungsgemäßen Lösung ist der Exzenter mit dem Anlenkhebelkopf verstemmt, vernietet oder verspreizt. Selbstverständlich sind auch weitere Ausführungsformen, wie bspw. ein Verkleben, Verlöten oder Verschweißen denkbar.

Bei einem Verspreizen besitzt der Exzenter erfindungsgemäß einen Hülsenkörper, der in eine im Anlenkhebelkopf ausgebildete Öffnung einsteckbar ist, so dass ein Halteabschnitt des Hülsenkörpers im Inneren der Öffnung angeordnet ist. Zusätzlich vorgesehen ist ein Kern- bzw. Spreizkörper, der im Inneren des Hülsenkörpers angeordnet ist und im montierten Zustand den Halteabschnitt mit einer die Öffnung radial begrenzenden Innenwand der Öffnung radial verspannt und dadurch den Exzenter am Anlenkhebelkopf axial und/oder drehfest fixiert. Auch denkbar ist eine Vernietung des Exzenters mit dem Anlenkhebelkopf, bspw. in der Art einer Blindnietverbindung. Vorteilhafterweise ist dabei bis kurz vor Fertigstellung der Montage der Exzenter bzw. Nocken noch einstellbar, so dass erst im Bereich der Endkontrolle der Exzenter justiert und darüber der Minimaldurchfluss durch die variable Turbinengeometrie eingestellt wird, um anschließend den Exzenter am zugehörigen Anlenkhebel zu fixieren. Hierdurch ist insbesondere der Ausgleich von Herstellungstoleranzen vergleichsweise einfach möglich.

Bei einer vorteilhaften Weiterbildung der erfindungsgemäßen Lösung weist der Hülsenkörper an seiner Außenseite im Halteabschnitt eine reibungserhöhende Schicht auf, wobei insbesondere vorgesehen sein kann, dass es sich bei der reibungserhöhenden Schicht um eine Chemisch-Nickel-Matrix mit darin eingebetteten Siliziumcarbid-Partikeln handelt. Mit einer derartigen reibungserhöhenden Schicht, insbesondere auch hervorgerufen durch eine entsprechende Rauigkeit, kann eine Haftreibungskraft zwischen dem Hülsenkörper und der Innenwand der Öffnung im Anlenkhebelkopf erhöht und dadurch die Fixierung des Exzenters am Anlenkhebelkopf verstärkt werden. Eingelagerte Siliziumcarbid-Partikel übernehmen dabei die Erhöhung der Rauigkeit und verstärken dadurch die Haftreibung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht von oben auf eine erfindungsgemäße variable Turbinengeometrie,
- Fig. 2: unterschiedliche Detailansichten der variablen Turbinengeometrie im Bereich eines Anlenkhebels,
- Fig. 3: eine Schnittdarstellung durch eine mögliche Ausführungsform eines Anlenkhebels mit einem daran befestigten Exzenter,
- Fig. 4, 5: weitere Schnittdarstellungen durch mögliche Ausführungsformen eines Anlenkhebels mit einem daran befestigten Exzenter.

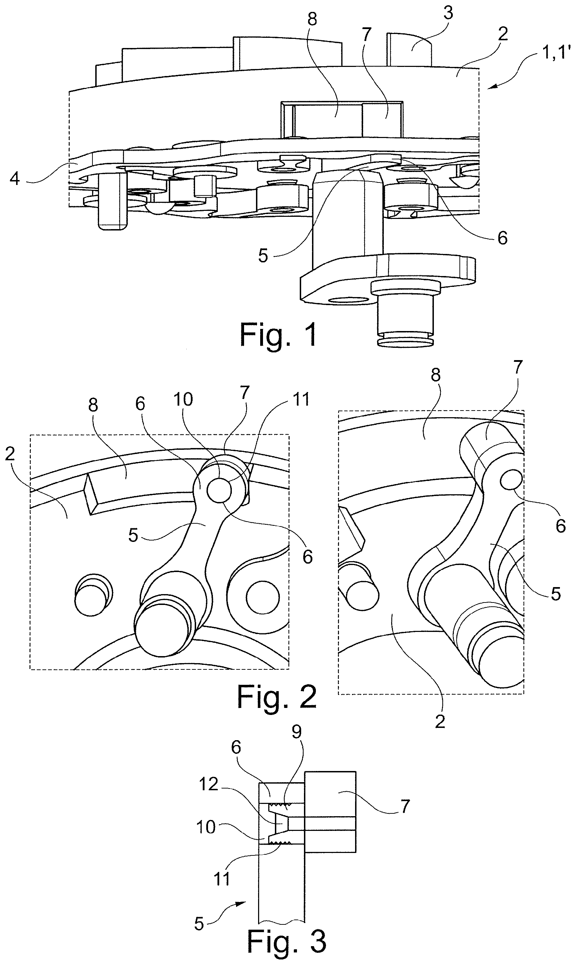

Entsprechend der Fig. 1, weist eine erfindungsgemäße variable Turbinengeometrie 1, insbesondere für einen Abgasturbolader für ein Kraftfahrzeug, einen Schaufellagerring 2 sowie drehbar darin gelagerte Leitschaufeln 3 auf. Zur Verstellung der Leitschaufeln 3 ist ein Verstellring 4 vorgesehen, der über einen Anlenkhebel 5 von einer nicht näher beschriebenen Stelleinrichtung verstellbar ist. Der Anlenkhebel 5 ist gemäß der Fig. 2 detailliert dargestellt und trägt einen Anlenkhebelkopf 6, mit welchem er in eine entsprechende Öffnung am Verstellring 4 eingreift und dadurch in der Lage ist, diesen zu verstellen. Um nun einen Minimaldurchfluss durch die variable Turbinengeometrie 1 begrenzen zu können, ist am Anlenkhebel 5 ein einstellbarer Exzenter 7, bspw. in der Art eines Nockens, angeordnet, der in einer am Schaufellagerring 2 angeordneten Nut 8 geführt ist. Zumindest der Minimaldurchfluss durch die variable Turbinengeometrie 1 ist dabei durch einen Anschlag des Exzenters 7 an zumindest einem Ende, insbesondere an einem Längsende, der Nut 8 begrenzt. Hierdurch werden dem eigentlichen Anlenkhebel 5 zwei Funktionen zugeordnet, nämlich einerseits die Verstellung der Leitschaufeln 3 über den Verstellring 4 und andererseits die Begrenzung zumindest des Minimaldurchflusses durch den am Anlenkhebelkopf 6 des Anlenkhebels 5 angeordneten Exzenter 7. Ist der Exzenter 7 bspw. in der Art eines Nockens ausgebildet, so kann dieser durch eine einfache Relativverdrehung zum Anlenkhebelkopf 6 eine maximale Auslenkung des Anlenkhebels 5 und damit auch eine maximale bzw. minimale Stellung der einzelnen Leitschaufeln 3 beeinflussen.

Betrachtet man die Fig. 1 bis 3, so kann man erkennen, dass der Exzenter 7 als Axialfortsatz am Anlenkhebelkopf 6 ausgebildet ist, wobei dieser Anlenkhebelkopf 6 mit dem Verstellring 4 zusammenwirkt. Die am Schaufellagerring 2 angeordnete Nut 8 ist vorzugsweise zu einer Stirnseite und nach außen hin offen ausgebildet, wodurch der Anlenkhebel 5 mit seinem Anlenkhebelkopf 6 und dem zugehörigen Verstellring 4 im Wesentlichen unverändert bleiben kann. Eine Verbindung zwischen dem Exzenter 7 und dem Anlenkhebelkopf 6 kann bspw. durch ein Verstemmen, Vernieten oder Verspreizen (vgl. Fig. 3) erfolgen.

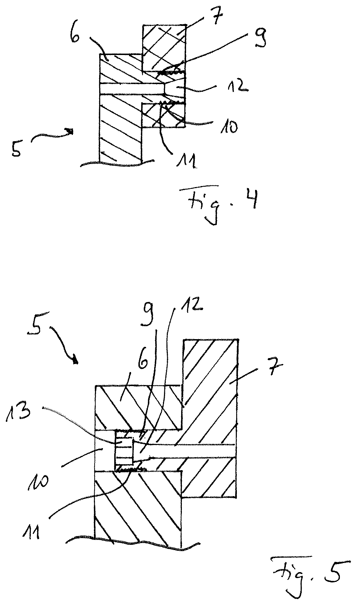

Zum Verspreizen des Exzenters 7 am Anlenkhebelkopf 6 des Anlenkhebels 5 kann der Exzenter 7 einen Hülsenkörper 9 aufweisen, der in eine am Anlenkhebelkopf 6 ausgebildete Öffnung 10 einsteckbar ist, so dass ein Halteabschnitt 11 des Hülsenkörpers 9 im Inneren der Öffnung 10 angeordnet ist. Zusätzlich ist ein Kernkörper 12, üblicherweise auch Spreizkörper genannt, vorgesehen, der im Inneren des Hülsenkörpers 9 angeordnet ist und im montierten Zustand den Halteabschnitt 11 mit einer die Öffnung 10 radial begrenzenden Innenwand der Öffnung 10 radial verspannt und dadurch den Exzenter 7 am Anlenkhebelkopf 6 axial und/oder drehfest fixiert. Besonders die drehfeste Fixierung ist dabei wichtig für die definierte und unlösbare Einstellung des minimalen Durchflusses durch die variable Turbinengeometrie 1. Der Hülsenkörper 9 kann dabei am Exzenter 7 angeordnet sein, wie dies in Fig. 3 dargestellt ist, oder aber auch am Anlenkhebelkopf 6, wie dies in Fig. 4 dargestellt ist. Im zuletzt genannten Fall erfolgt somit ein Verspreizen des Kernkörpers 12 in einer entsprechenden Öffnung 10 des Exzenters 7.

Betrachtet man die Fig. 3 weiter, so kann man erkennen, dass der Hülsenkörper 9 im Halteabschnitt 11 einen Innenkonus aufweist, der mit einem Außenkonus des Kernkörpers 12 zum radialen Verspannen zusammenwirkt. Generell kann der Hülsenkörper 9 im Bereich des Halteabschnitts geschlitzt ausgebildet sein, wodurch ein Spreizen desselben erleichtert wird. Der Kernkörper 12 selbst kann bspw. einen kegelstumpfartigen, kegeligen, balligen oder kugelförmigen Querschnitt, insbesondere auch Außenquerschnitt, aufweisen.

Zur besseren Fixierung des Halteabschnitts 11 in der Öffnung 10 des Anlenkhebelkopfs 6 des Anlenkhebels 5 kann der Hülsenkörper 9 zusätzlich an seiner Außenseite im Bereich des Halteabschnitts 11 eine reibungserhöhende Schicht aufweisen, wobei es sich bspw. um eine Chemisch-Nickel-Matrix mit darin eingebetteten Siliziumcarbid-Partikeln handelt. Ein Verspreizen des Kernkörpers 12 im konischen Abschnitt des Hülsenkörpers 9 kann bspw. durch ein Einschlagen oder aber auch durch ein Einziehen erfolgen, wobei das Einziehen bspw. in der Art eines Blindnietsetzens erfolgen kann, bei welchem die Zugstange nach dem Verspreizen des Hülsenkörpers 9 ab einer bestimmten Zugkraft abbricht, wodurch der Exzenter 7 unlösbar fest mit dem Anlenkhebelkopf 6 verbunden ist. Generell ist anstelle eines derartigen Verspreizens auch ein Verkleben, Verlöten, Verschweißen, Verstemmen, etc. denkbar. Mit dem erfindungsgemäß ausgestalteten Exzenter 7 wird eine unlösbare und dadurch lediglich schwer manipulierbare Verbindung zwischen dem Exzenter 7 und dem Anlenkhebel 5 geschaffen, wodurch der erfindungsgemäße Abgasturbolader insbesondere vor Missbrauchslasten durch Manipulation geschützt werden kann. Die Montage des Exzenters 7 gestaltet sich dabei vergleichsweise einfach, wobei zudem ein im Vergleich zu bisherigen Gewindeschrauben mit Kontermuttern deutlich reduzierter Bauraumbedarf erforderlich ist, was insbesondere bei modernen und engen Motorräumen von großem Vorteil ist. Die Einstellung der variablen Turbinengeometrie 1 und insbesondere des minimalen Durchflusses derselben kann dabei auch separat erfolgen, ohne dass die variable Turbinengeometrie 1 in eine Ladeeinrichtung, bspw. einen Abgasturbolader, bereits eingebaut ist. Auch sind im Vergleich zu bisherigen Einstellmöglichkeiten deutlich weniger Bauteile erforderlich, wodurch die Teilevielfalt und damit auch die Lager- und Logistikkosten reduziert werden können. In der Figurenbeschreibung wurde zwar stets von einer variablen Turbinengeometrie 1 gesprochen, es ist jedoch klar, dass die zuvor genannten Ausführungsformen in unveränderter Weise auch auf eine variable Verdichtergeometrie 1' übertragbar sind.

Um insbesondere ein Ausrichten des Exzenters 7 zu erleichtern, kann am Hülsenkörper 9 ein Innenmehrkant 13 bzw. ein Innenunrund (Polygon), insbesondere ein Innensechskant oder ein Torx, vorgesehen sein, der ein drehfestes Eingreifen eines komplementären Werkzeugs, beispielsweise eines Inbusschlüssels, erlaubt. Ein derartiger Innenmehrkant 13 ist dabei nur in der Fig. 5 dargestellt, wobei es selbstverständlich klar ist, dass ein solcher auch an den anderen Ausführungsformen anbringbar ist.

## Patentansprüche

1. Variable Turbinengeometrie (1), insbesondere für einen Abgasturbolader für ein Kraftfahrzeug, die in einem Schaufellagerring (2) drehbar gelagerte Leitschaufeln (3) aufweist, wobei zur Verstellung der Leitschaufeln (3) ein Verstellring (4) vorgesehen ist, der über einen Anlenkhebel (5) von einer Stelleinrichtung verstellbar ist,
wobei,
- am Anlenkhebel (5) ein einstellbarer Exzenter (7) angeordnet ist, der in einer am Schaufellagerring (2) angeordneten Nut (8) geführt ist,
- durch einen Anschlag des Exzenters (7) an zumindest einem Ende der Nut (8) zumindest ein Minimaldurchfluss durch die variable Turbinengeometrie (1) begrenzt ist,
**dadurch gekennzeichnet,**
- **dass** der Exzenter (7) einen Hülsenkörper (9) aufweist, der in eine im Anlenkhebelkopf (6) ausgebildete Öffnung (10) einsteckbar ist, so dass ein Halteabschnitt (11) des Hülsenkörpers (9) im Inneren der Öffnung (10) angeordnet ist,
- **dass** ein Kernkörper (12) vorgesehen ist, der im Inneren des Hülsenkörpers (9) angeordnet ist und im montierten Zustand den Halteabschnitt (11) in der Öffnung (10) radial verspannt und dadurch den Exzenter (7) am Anlenkhebelkopf (6) axial und/oder drehfest fixiert.

2. Variable Turbinengeometrie nach Anspruch 1,
**dadurch gekennzeichnet,**
**dass** der Exzenter (7) als Axialfortsatz an einem Anlenkhebelkopf (6) ausgebildet ist, wobei der Anlenkhebelkopf (6) mit dem Verstellring (4) zusammenwirkt.

3. Variable Turbinengeometrie nach Anspruch 1 oder 2,
**dadurch gekennzeichnet,**
**dass** die Nut (8) am Schaufellagerring (2) zu einer Stirnseite und nach außen hin offen ausgebildet ist.

4. Variable Turbinengeometrie nach Anspruch 2 oder 3,
**dadurch gekennzeichnet,**
**dass** der Exzenter (7) mit dem Anlenkhebelkopf (6) verstemmt, vernietet oder verspreitzt ist.

5. Variable Turbinengeometrie nach einem der Ansprüche 1 bis 4,
**dadurch gekennzeichnet,**
**dass** der Hülsenkörper (9) im Halteabschnitt (11) einen Innenkonus aufweist, der mit einem Außenkonus des Kernkörpers (12) zum radialen Verspannen zusammenwirkt.

6. Variable Turbinengeometrie nach einem er Ansprüche 1 bis 5,
**dadurch gekennzeichnet,**
**dass** der Kernkörper (12) einen balligen oder kugelförmig gewölbten Außenquerschnitt aufweist.

7. Variable Turbinengeometrie nach einem der Ansprüche 1 bis 6,
**dadurch gekennzeichnet,**
**dass** der Hülsenkörper (9) an seiner Außenseite im Halteabschnitt (11) eine reibungserhöhende Schicht aufweist, wobei insbesondere vorgesehen sein kann, dass es sich bei der reibungserhöhenden Schicht um eine Chemisch-Nickel-Matrix mit darin eingebetteten Siliziumcarbid-Partikeln handelt.

8. Ladeeinrichtung mit einer variablen Turbinengeometrie (1) nach einem der Ansprüche 1 bis 7.

9. Verbrennungsmotor mit einer Ladeeinrichtung nach Anspruch 8.

## Claims

1. Variable turbine geometry (1), in particular for an exhaust turbocharger for a motor vehicle, which in a blade bearing ring (2) has rotatably mounted guide blades (3), wherein for adjusting the guide blades (3) an adjustment ring (4) is provided which can be adjusted by an articulated lever (5) of an adjusting device,
wherein
- on the articulated lever (5) an adjustable eccentric (7) is arranged which is guided in a groove (8) arranged on the blade bearing ring (2),
- at least a minimum flow through the variable turbine geometry (1) is delimited by a stop of the eccentric (7) at at least one end of the groove (8), **characterised in that**
- the eccentric (7) has a sleeve body (9) which can be inserted into an opening (10) formed in articulated lever head (6) so that a retaining section (11) of the sleeve body (9) is arranged inside the opening (10),
- a core body (12) is provided which is arranged inside the sleeve body (9) and in the mounted state radially tensions the retaining section (11) in the opening (10) and thereby fixes the eccentric (7) onto the articulated lever head (6) axially and/or in a rotationally secure manner.

2. Variable turbine geometry according to claim 1,
**characterised in that**
the eccentric (7) is designed as an axial extension on an articulated lever head (6), wherein the articulated lever head (6) cooperates with the adjustment ring (4).

3. Variable turbine geometry according to claim 1 or 2,
**characterised in that**
the groove (8) on the blade bearing ring (2) is designed to be open to an end side and to the outside.

4. Variable turbine geometry according to claim 2 or 3,
**characterised in that**
the eccentric (7) is caulked, riveted or splayed to the articulated lever head (6).

5. Variable turbine geometry according to any of claims 1 to 4,
**characterised in that**
the sleeve body (9) in the retaining section (11) has an internal cone which cooperates with an external cone of the core body (12) for radial tensioning.

6. Variable turbine geometry according to any of claims 1 to 5,
**characterised in that**
the core body (12) has a crowned or spherical external cross-section.

7. Variable turbine geometry according to any of claims 1 to 6,
**characterised in that**
the sleeve body (9) on its outside in the retaining section (11) has a friction-increasing layer, wherein in particular it is possible that the friction-increasing layer is a chemical-nickel matrix with silicon carbide particles embedded therein.

8. Charging device with a variable turbine geometry (1) according to any of claims 1 to 7.

9. Combustion engine with a charging device according to claim 8.

## Revendications

1. Géométrie de turbine variable (1), en particulier pour un turbocompresseur à gaz d'échappement pour un véhicule automobile, laquelle comporte des aubes directrices (3) logées de manière à pouvoir tourner dans une bague de palier à aubes (2), dans laquelle il est prévu pour le réglage des aubes directrices (3) une bague de réglage (4) qui est réglable par un dispositif régleur par l'intermédiaire d'un levier articulé (5),
dans laquelle
- un excentrique réglable (7) est agencé au niveau du levier articulé (5), lequel excentrique est guidé dans une rainure (8) agencée au niveau de la bague de palier à aubes (2),
- au moins un flux minimal à travers la géométrie de turbine variable (1) est limité par une butée de l'excentrique (7) au niveau d'au moins une extrémité de la rainure (8),
**caractérisée en ce que**
- l'excentrique (7) comporte un corps de manchon (9) qui peut être enfoncé dans une ouverture (10) réalisée dans la tête de levier articulé (6) de telle sorte qu'un segment de maintien (11) du corps de manchon (9) est agencé à l'intérieur de l'ouverture (10),
- il est prévu un corps de noyau (12) qui est agencé à l'intérieur du corps de manchon (9) et qui serre de façon radiale le segment de maintien (11) dans l'ouverture (10) à l'état monté et fixe ainsi l'excentrique (7) de façon axiale et/ou de manière solidaire en rotation au niveau de la tête de levier articulé (6).

2. Géométrie de turbine variable selon la revendication 1,
**caractérisée en ce que**
l'excentrique (7) est réalisé comme un prolongement axial au niveau d'une tête de levier articulé (6), laquelle tête de levier articulé (6) coopère avec la bague de réglage (4).

3. Géométrie de turbine variable selon la revendication 1 ou 2,
**caractérisée en ce que**
la rainure (8) est réalisée, au niveau de la bague de palier à aubes (2), ouverte vers un côté frontal et vers l'extérieur.

4. Géométrie de turbine variable selon la revendication 2 ou 3,
**caractérisée en ce que**
l'excentrique (7) est rabattu, riveté ou écarté avec la tête de levier articulé (6).

5. Géométrie de turbine variable selon l'une quelconque des revendications 1 à 4,
**caractérisée en ce que**
le corps de manchon (9) comporte dans le segment de maintien (11) un cône intérieur qui coopère avec un cône extérieur du corps de noyau (12) pour le serrage radial.

6. Géométrie de turbine variable selon l'une quelconque des revendications 1 à 5,
**caractérisée en ce que**
le corps de noyau (12) a une section transversale extérieure bombée ou courbée en forme de sphère.

7. Géométrie de turbine variable selon l'une quelconque des revendications 1 à 6,
**caractérisée en ce que**
le corps de manchon (9) comporte une couche augmentant le frottement au niveau de son côté extérieur dans le segment de maintien (11), sachant qu'il peut notamment être prévu que la couche augmentant le frottement soit une matrice chimique de nickel avec des particules de carbure de silicium noyées à l'intérieur.

8. Dispositif de suralimentation avec une géométrie de turbine variable (1) selon l'une quelconque des revendications 1 à 7.

9. Moteur à combustion interne avec un dispositif de suralimentation selon la revendication 8.
